# EUROPEAN PATENT SPECIFICATION

(11) **EP 2 345 337 B1**
(45) Date of publication and mention of the grant of the patent: **01.06.2016**
(21) Application number: 09823620.1
(22) Date of filing: 28.10.2009
(51) Int. Cl.: A23L 2/60, A23L 33/20, A23L 27/30

(54) **LOW-CALORIE BEVERAGE COMPOSITION CONTAINING LUO HAN GUO EXTRACT AND SUCRALOSE**
KALORIENARME GETRÄNKEZUSAMMENSETZUNG MIT LUO-HAN-GUO-EXTRAKT UND SUCRALOSE
COMPOSITION DE BOISSON À FAIBLE TENEUR EN CALORIE CONTENANT UN EXTRAIT DE LUO HAN GUO ET DU SUCRALOSE

(30) Priority: 28.10.2008 JP 2008276625; 14.11.2008 JP 2008292538
(43) Date of publication of application: 20.07.2011
(73) Proprietor: Otsuka Pharmaceutical Co., Ltd., Tokyo 101-8535 (JP)
(72) Inventor: TAKAICHI, Akihisa, Osaka-shi Osaka 5410045 (JP)
(74) Representative: Hoffmann Eitle
(86) International application number: PCT/JP2009/068508
(87) International publication number: WO 2010/050510

(56) References cited:
- WO-A1-2007/061858
- GB-A- 1 541 461
- JP-A- 52 041 273
- JP-A- 2000 004 852
- JP-A- 2006 340 612
- JP-T- 2004 520 072
- US-A- 5 433 965
- US-A1- 2007 098 867
- US-A1- 2008 299 277

## Description

### Technical Field

The present invention relates to a low-calorie drink composition. More specifically, the present invention relates to a low-calorie drink composition having a refreshing sweet taste, in which undesirable tastes such as bitter taste, astringent taste or the like due to an inorganic electrolyte is avoided by the addition of high-intensity sweeteners of sucralose and *Siraitia grosvenori* extract.

### Background Art

Low-calorie drinks for sports are known as drink compositions for replacing the water and electrolytes lost by sweating in sports and the like. Such low-calorie drink compositions contain an inorganic electrolyte or an organic acid to compensate for the cations such as Na⁺, K⁺, Mg²⁺, Ca²⁺ , etc., and the anions such as Cl⁻, a phosphoric acid ion, etc. lost by sweating. However, if an inorganic electrolyte is supplied to a drink in an amount sufficient to compensate for the cations and/or anions depleted, the resulting drink has undesirable tastes such as bitter taste, salty taste, astringent taste, etc., and leaves a bad taste when drank.

Various sweeteners have been used to prevent such undesirable tastes in drinks containing an inorganic electrolyte. As such sweeteners, sucrose is most preferred in terms of taste; however, an excess amount of sucrose problematically results in an increase in calories. Therefore, the use of high-intensity sweeteners such as sucralose, aspartame, acesulfame potassium, etc. has been examined as a replacement for sucrose. However, the sweet taste of these sweeteners is inferior in quality to that of sucrose. Further, for example, aspartame is unstable in acidic drinks, which problematically degrades the sweet taste in about three months. For these reasons, even if a high-intensity sweetener is used, drink compositions that are completely free of undesirable tastes due to an inorganic electrolyte have not been developed.

*Siraitia grosvenori* extracts are known as a naturally occurring, high-intensity sweetener. *Siraitia grosvenori,* whose academic name is "*Siraitia grosvenori Swingle*", is the fruit of a perennial cucurbitaceous plant grown in the Chinese province of Guangxi, Guilin and its surroundings. The sweet component of *Siraitia grosvenori* extract is a glycoside called "mogroside", which has a taste nearly 300 times sweeter than that of sucrose. In addition to its high degree of sweetness, it has been reported that *Siraitia grosvenori* extracts have an antioxidant activity, anti-arteriosclerosis activity, cancer inhibitory activity, antiallergic activity, and antidiabetic activity (Non-Patent Document 1). Lately, drinks that contain a *Siraitia grosvenori* extract have been proposed (Patent Documents 1 to 3).

However, low-calorie drink compositions whose undesirable tastes such as bitter taste, salty taste, astringent taste or the like due to an inorganic electrolyte are fully improved by the addition of high-intensity sweeteners have not been developed.

Patent Document 1: Japanese Unexamined Patent Publication No. 2000-4852
Patent Document 2: Japanese Unexamined Patent Publication No. 2008-148
Patent Document 3: WO2006/005011
Non-patent Document 1: FOODS FOOD INGREDIENTS J. JPN., VOL. 210, NO.3, P.244-254, 2005

US 5 433 965 A relates to a natural sweetening composition comprising: (a) sweet juice derived from the botanical genus/species Siraitia grosvenorii, S. siamensis, S. silomaradjae, S. sikkimensis, S. africana, S. borneensis, S. taiwaniana or mixtures thereof; and (b) sugar, wherein said sugar is selected fructose, sucrose, glucose or mixtures thereof; and wherein the ratio of the sweet juice to the sugar is from about 1:1 to about 1:5.

US 2007/00998867 A1 pertains to a Low Carbohydrate, Low Glycemic Index, cane sugar-free sweetener comprising a synergistic mixture of Lo Han Kuo Extract and Sucralose Liquid or Powder for use in an improved tasting ice-cream or for sweetening baked goods, candy, and beverages.

US 2008/0299277 A 1 relates to sweetening compositions that include (1) at least a sweetener selected from the group consisting of sucralose, acesulfame potassium, saccharin, aspartame, a stevia extract, neotame, cyclamate, a Luo Han Guo extract, a polyol, and a mixture thereof; (2) at least a preservative selected from the group consisting of potassium sorbate, sodium sorbate, sodium benzoate, potassium benzoate, methyl gallate, propyl gallate, sodium ethylenediaminetetraacetate, methyl paraben, propyl paraben, and a mixture thereof; and (3) at least an acid selected from the group consisting of citric acid, succinic acid, lactic acid, propionic acid, tartaric acid, tannic acid, phosphoric acid, adipic acid, malic acid, acetic acid, gluconic acid, ascorbic acid, and a mixture thereof.

GB 1 541 461 A relates to powdered mixtures which can be reconstituted with water to form electrolyte drinks. More specifically, it relates to flavored, powdered mixtures which can be reconstituted with water to form flavored hypotonic drinks which are characterized by rapid gastric emptying into the system, thereby providing excellent availability of water and electrolytes to the system.

### Disclosure of the Invention

### Problems to be Solved by the Invention

An object of the present invention is to provide a low-calorie drink composition having a refreshing sweet taste, the composition being free of undesirable tastes such as bitter taste, salty taste, and astringent taste that inorganic electrolyte-containing drinks generally have.

### Means for Solving the Problem

In view of the current situation, the present inventors conducted an enormous amount of research. As a result, they unexpectedly found that when a *Siraitia grosvenori* extract and sucralose are mixed with an inorganic electrolyte- and organic acid-containing drink having undesirable tastes such as bitter taste, salty taste, astringent taste, etc., the undesired taste resulting from an inorganic electrolyte is remarkably improved. Further, they also found that the combination of an inorganic electrolyte, an organic acid, and a *Siraitia grosvenori* extract can provide a low-calorie drink without impairing the antioxidant activity, anti-arteriosclerosis activity, cancer inhibitory activity, antiallergic activity, and antidiabetic activity of *Siraitia grosvenori* extract. The inventors further found that a drink containing the aforementioned components in a combination is stable over time, and thus is capable of being stored for a long period of time. The present invention was accomplished based on these findings.

Specifically, the present invention provides the following low-calorie drink composition.
Item 1. A low-calorie drink composition containing an inorganic electrolyte, an organic acid, a *Siraitia grosvenori* extract, and sucralose, wherein the inorganic electrolyte is an electrolyte that provides a sodium ion, a potassium ion, a magnesium ion, a calcium ion, and a chloride ion, and wherein the content of sodium ion is 483 to 529 mg/ml (21 to 23 mEq/l), the content of potassium ion is 175.5 to 234 mg/ml (4.5 to 6 mEq/l), the content of magnesium ion is 6.075 to 12.15 mg/ml (0.5 to 1 mEq/l), the content of calcium ion is 20 to 40 mg/ml (1 to 2 mEq/l), the content of chloride ion is 584.1 to 778.8 mg/ml (16.5 to 22 mEq/l), the content of *Siraitia grosvenori* extract is 6 to 16 mg/l (dry weight basis), and the content of sucralose is 18 to 24 mg/l, wherein the *Siraitia grosvenori* extract is present in an amount of 60 to 75 parts by weight calculated on a dry weight basis per 100 parts by weight of the sucralose.
Item 2. The low-calorie drink composition according to Item 1, wherein the inorganic electrolyte is present in an amount such that the total content of an inorganic cation and an inorganic anion is 30 to 80 mEq per 1,000 ml of the drink composition.
Item 3. The low-calorie drink composition according to Item 1, wherein the organic acid is at least one member selected from the group consisting of citric acid, lactic acid, L-glutamic acid, succinic acid, aspartic acid, alginic acid, malic acid, gluconic acid, and fumaric acid.
Item 4. The low-calorie drink composition according to Item 1, wherein the organic acid is present in an amount of 1,000 to 2,000 mg per 1,000 ml of the drink composition.
Item 5. The low-calorie drink composition according to Item 1, wherein the total content of anion inorganic electrolyte and cation inorganic electrolyte is 55 to 59 mEq/l, the content of organic acid is 1,000 to 2,000 mg/l, the content of *Siraitia grosvenori* extract is 8 to 16 mg/l (dry weight basis), and the content of sucralose is 18 to 24 mg/l.
Item 6. A method for preparing a low-calorie drink composition as defined in any one of claims 1-7, comprising mixing an inorganic electrolyte that provides a sodium ion, a potassium ion, a magnesium ion, a calcium ion, and a chloride ion, an organic acid, a *Siraitia grosvenori* extract, and sucralose in water.

### Effects of the Invention

The present invention provides a low-calorie drink composition having a refreshing sweet taste that is easy to drink, in which undesirable tastes such as astringent taste, salty taste, bitter taste, etc. due to an inorganic electrolyte are avoided without impairing the antioxidant activity, anti-arteriosclerosis activity, cancer inhibitory activity, antiallergic activity and antidiabetic activity of *Siraitia grosvenori* extract.

Further, the drink of the present invention allows a *Siraitia grosvenori* extract to be contained in a stable manner even after long-term storage, and thus is capable of retaining good taste and flavor. Accordingly, the drink of the present invention does not undergo any degradation in taste during transportation and storage; it is excellent in view of practical use.

### Best Mode for Carrying Out the Invention

The inorganic electrolyte is added to the low-calorie drink composition of the present invention to replace the inorganic electrolyte cations and anions depleted by sweating. Examples of inorganic electrolyte cations include Na⁺, K⁺, Mag²⁺, and Ca²⁺, and examples of inorganic electrolyte anions include Cl⁻ and a phosphoric acid ion. The inorganic electrolytes are not particularly limited as long as they are capable of containing the aforementioned inorganic electrolyte cations and/or inorganic electrolyte anions in an aqueous solution in a free state and sanitarily acceptable in a food field.

Examples of inorganic electrolytes include inorganic salts of alkali metals such as sodium, potassium, etc., and inorganic salts of alkaline-earth metals such as magnesium, calcium, etc. Examples of inorganic salts include chloride salts and phosphoric salts. Specific examples of inorganic electrolytes include NaCl, KCl, MgCl₂, MgCO₃, CaCl₂, CaSO₄, Na₂SO₄, K₃PO₄, Ca₃[PO₄]₂, K₂HPO₄, KH₂PO₄, CaHPO₄, etc.

These inorganic electrolytes may be used singly or in combination. It is preferable to use two or more inorganic electrolytes in combination so that the drink contains both alkali metal cations and alkaline-earth metal cations. It is preferable that the inorganic electrolyte be used in a suitable salt form in consideration of the combination of ions, so that chlorine ions, phosphoric acid ions and the like can be supplied as inorganic electrolyte anions together with inorganic electrolyte cations. For example, it is desirable that the inorganic electrolyte of the present invention be determined so that the combination of sodium ions, potassium ions, magnesium ions, and chloride ions, or the combination of sodium salts, potassium ions, calcium ions, and chloride ions, and preferably the combination of sodium ions, potassium ions, magnesium ions, calcium ions, and chloride ions can be supplied.

The organic acid added to the drink composition of the present invention is not particularly limited, as long as it is generally used for drinking purposes. Examples thereof include citric acid, lactic acid, L-glutamic acid, succinic acid, aspartic acid, alginic acid, malic acid, gluconic acid, fumaric acid, etc. Among these, citric acid and gluconic acid are preferable since they can further improve the taste of the calorie drink composition. The organic acid may be used as a free acid, or in a salt form with an alkali metal or an alkaline earth metal. When the organic acid is used in a salt form with an alkali metal, it is possible to incorporate an organic acid and an inorganic electrolyte cation into the drink at the same time. Examples of such organic acid salts include sodium citrate, calcium citrate, sodium lactate, calcium lactate, sodium succinate, disodium succinate, sodium L-glutamate, sodium aspartate, sodium malate, calcium gluconate, etc.

In the drink composition of the present invention, the amounts and kinds of the electrolyte and the organic acid to be added are suitably selected according to the concentrations and kinds of the electrolytic ion and the organic acid to be added.

The *Siraitia grosvenori* extract added to the drink composition of the present invention is known as a sweetener extracted from a fruit of a perennial cucurbitaceous plant. The *Siraitia grosvenori* extract is commercially available from market, and any variety thereof can be used. It is also possible to obtain the *Siraitia grosvenori* extract from the fruit of *Siraitia grosvenori* according to a known method. For example, the *Siraitia grosvenori* extract may be extracted from a *Siraitia grosvenori* fruit using water, ethanol or like solvents. If necessary, the *Siraitia grosvenori* fruit may be subjected to washing, crushing, pulverizing, cutting into small pieces, degreasing, fermenting, etc. before extraction. Such treatments may be freely combined. After extraction, filtration, concentration, drying, etc. may be performed to obtain a powdery *Siraitia grosvenori* extract.

The *Siraitia grosvenori* extract generally contains glycoside, a sweet component; examples thereof include mogroside V, mogroside IV, 11-oxo mogroside V, siamenoside I and the like.

The sucralose added to the drink composition of the present invention is a sweetener (4,1',6'-trichloro-4,1',6'-trideoxygalacto sucrose) that has a taste about 600 times sweeter than sugar. Sucralose is commercially available, and any variety thereof can be added to the drink composition of the present invention.

The inorganic electrolyte can be added in an amount sufficient to replace the inorganic electrolyte cation and anion lost by sweating. The inorganic electrolyte is contained in an amount such that the total content of inorganic cation and inorganic anion is preferably about 10 to 80 mEq, and more preferably about 40 to 60 mEq, per 1,000 ml of drink composition. More specifically, the inorganic cation is preferably contained in an amount of about 10 to 40 mEq, and more preferably about 20 to 30 mEq, per 1,000 ml of drink composition, and the inorganic anion is preferably contained in an amount of about 10 to 40 mEq, and more preferably about 20 to 30 mEq, per 1,000 ml of drink composition.

In view of balance with a sweet taste, the organic acid is added in an amount suitable for improving the aftertaste. According to one embodiment, the organic acid component is preferably contained in an amount of 1,000 to 2,000 mg, and more preferably 1,200 to 1,800 mg, on a dry weight basis, per 1,000 ml of drink composition.

The amount of *Siraitia grosvenori* extract is not particularly limited, as long as it is capable of decreasing bitter taste, astringent taste, salty taste, and undesirable aftertaste due to an inorganic electrolyte. The amount may be suitably determined in accordance with a desired sweet taste for drinks. The *Siraitia grosvenori* extract is contained in an amount of 6 to 16 mg, on a dry weight basis, per 1,000 ml of drink composition.

The amount of sucralose can be suitably determined in consideration of the sweet taste of the drink and the amount of *Siraitia grosvenori* extract. The sucralose is contained in an amount of 18 to 24 mg, and preferably 18 to 22 mg per 1,000 ml of drink composition.

To provide a low-calorie drink composition having an more improved flavor and a sweet taste that is more easy to drink the amount of *Siraitia grosvenori* extract (dry weight basis) is within the range of 60 to 75 parts by weight, per 100 parts by weight of sucralose.

A low-calorie drink composition with a refreshing sweet taste can be produced as long as the amounts of the inorganic electrolyte, organic acid, *Siraitia grosvenori* extract, and sucralose are within the range described above. However, according to one embodiment, a low-calorie drink composition that has a sweet taste more easy to drink can be obtained when each component is contained in the following range: 55 to 59 mEq/l of inorganic electrolyte (total amount of anion and cation), 1,000 to 2,000 mg/l of organic acid, 6 to 16 mg/l of *Siraitia grosvenori* extract (dry weight basis), and 18 to 24 mg/l of sucralose; preferably 26 to 30 mEq/l of inorganic electrolyte cation, 26 to 30 mEq/l of inorganic electrolyte anion, 10 to 14 mg/l of *Siraitia grosvenori* extract (dry weight basis), and 18 to 24 mg/l of sucralose; and more preferably 483 to 529 mg/ml (21 to 23 mEq/l) of sodium ion, 175.5 to 234 mg/ml (4.5 to 6 mEq/l) of potassium ion, 6.075 to 12.15 mg/ml (0.5 to 1 mEq/l) of magnesium ion, 20 to 40 mg/ml (1 to 2 mEq/l) of calcium ion, 584.1 to 778.8 mg/ml (16.5 to 22 mEq/l) of chloride ion, 6 to 16 mg/l of *Siraitia grosvenori* extract (dry weight basis), and 18 to 24 mg/l of sucralose.

The use of the *Siraitia grosvenori* extract in the drink composition of the present invention can reduce the amount of sugar such as sucrose, which allows a considerable decrease in calories contained in the drink composition. The drink composition of the present invention is preferably 11 kcal or less, and more preferably 10 kcal or less, per 100 ml of the composition.

In addition to the above components, the drink composition of the present invention may contain components that are generally used in a drink composition, as long as the resulting composition has low calories, and the astringent taste and bitter taste can be reduced by the combination of inorganic electrolyte, organic acid, *Siraitia grosvenori* extract, and sucralose. Examples of other components include juices (juices of grapefruits, apples, oranges, lemons, pineapples, bananas, pears, etc.); vitamins (vitamin A, vitamin B2, vitamin B6, pantothenic acid, nicotinic acid, vitamin C, etc.); flavors (vanillin, linalool, natural flavors, etc.); stabilizers; various amino acids; dietary fibers (guar gum, polydextrose, indigestible dextrin, pectin, cellulose, etc.); saccharides (monosaccharides such as glucose, fructose, etc.; disaccharides such as cane sugar (including white sugar), maltose, lactose, etc.; and oligosaccharides such as fructooligosaccharide, soybean oligosaccharide, galacto-oligosaccharide, etc.); and sugar alcohols (erythritol, xylitol, sorbitol, mannitol, etc.).

The low-calorie drink composition of the present invention can be obtained by mixing with potable water the aforementioned inorganic electrolyte, organic acid, *Siraitia grosvenori* extract, sucralose, and optionally other sweeteners, vitamins, etc. After mixing each component, the drink composition of the present invention is, if necessary, subjected to degassing and sterilization, and then cooled. The resulting composition is then charged into a container.

The low-calorie drink composition of the present invention has a refreshing sweet taste that is easy to drink, and can replenish various inorganic electrolytes depleted by sweating. Accordingly, it is suitably used as a soft drink or sports drink drank after baths and sports. It is also possible to use the low-calorie drink composition of the present invention as a carbonated drink to provide the smooth taste of a carbonated drink. In addition, since the drink composition of the present invention does not impair antioxidant activity, anti-arteriosclerosis activity, cancer inhibitory activity, antiallergic activity, and antidiabetic activity, it is useful as a food for the sick, functional food, or food for specified health uses, as well as a general food.

### EXAMPLES

Hereinafter, the present invention will be explained in detail with reference to the examples; however, the present invention is not limited thereto. The *Siraitia grosvenori* extract used in the examples was available from Damin International Group, Choko Zitsugyo Kabusiki Kaisha, manufactured by DAMIN (China, Amoy); product number: concentrated FD RAKANKA powder JFL-038.

### Example: Taste Evaluation

Components shown in Table 1 below were added to 1,000 ml of water to obtain drinks.

**Table 1**

| Preparation No. | | Example 1 | Example 2* | Example 3* | Comparative Example 1 |
|---|---|---|---|---|---|
| Cation (mEq/l) | Na⁺ | 21 | 21 | 23 | 21 |
| | K⁺ | 5 | 5 | 5 | 5 |
| | Ca²⁺ | 1 | 1 | 1 | 1 |
| | Mg²⁺ | 0.5 | 0.5 | 0.5 | 0.5 |
| | Total | 27.5 | 27.5 | 29.5 | 27.5 |
| Anion (mEq/l) | Cl⁻ | 16.5 | 16.5 | 18.5 | 16.5 |
| | Citrate⁻ | 10 | 10 | 10 | 10 |
| | Lactate⁻ | 1 | 1 | 1 | 1 |
| | Total | 27.5 | 27.5 | 29.5 | 27.5 |
| *Siraitia grosvenori* extract (mg/l) | | 12 | 8 | 6 | 0 |
| Sucralose (mg/l) | | 20 | 20 | 20 | 20 |
| Others | Fructose (g/l) | 9 | 9 | 9 | 9 |
| | White sugar (g/l) | 2.5 | 2.5 | 2.5 | 2.5 |

| | | | | | |
|---|---|---|---|---|---|
| *: Examples not falling within the scope of the invention as claimed | | | | | |

The drinks obtained in Examples 1 to 3 and Comparative Example 1 were given to 10 judges. According to the criteria shown in Table 2 below, the drinks were evaluated for bitter taste, astringent taste, salty taste, and aftertaste, and comprehensively evaluated for ease of drink and taste. The evaluation results are shown in Table 3.

**Table 2**

| | | Point | | | | |
|---|---|---|---|---|---|---|
| | | 5 | 4 | 3 | 2 | 1 |
| Evaluation Item | Bitter taste | No bitter taste | Almost no bitter taste | Slightly bitter taste | Bitter taste | Very bitter taste |
| | Astringent taste | No astringent taste | Almost no astringent taste | Slightly astringent taste | Astringent taste | Very astringent taste |
| | Salty taste | No salty taste | Almost no salty taste | Slightly salty taste | Salty taste | Very salty taste |
| | Aftertaste | No aftertaste | Almost no aftertaste | Slight aftertaste | Aftertaste | Strong aftertaste |

**Table 3**

| | Bitter taste | Astringent taste | Salty taste | Aftertaste | Comprehensive evaluation |
|---|---|---|---|---|---|
| Example 1 | 5 | 5 | 5 | 5 | Leaving no aftertaste; good taste. |
| Example 2* | 3 | 4 | 5 | 3 | Leaving slightly bitter taste, but palatable. |
| Example 3* | 3 | 3 | 3 | 2 | Acceptable as a drink, but many people note a bitter taste when drank. |
| Comparative Example 1 | 2 | 2 | 2 | 2 | Bad taste. |

| | | | | | |
|---|---|---|---|---|---|
| *: Examples not falling within the scope of the invention as claimed | | | | | |

As is clear from the results of Table 3, because the drinks of Examples 1 to 3, which correspond to the low-calorie compositions of the present invention contain an inorganic electrolyte, a *Siraitia grosvenori* extract, and sucralose, undesirable tastes such as bitter taste, astringent taste, and salty taste due to an inorganic electrolyte were remarkably improved in the drinks. The results reveal that the combination of an inorganic electrolyte, an organic acid, a *Siraitia grosvenori* extract, and sucralose can provide the drink composition of the present invention, i.e., the composition having a refreshing sweet taste and flavor that has not been developed heretofore.

### Example: Stability Evaluation

Components shown in Table 4 below were added to 1,000 ml of water to obtain drinks (Example 4). The resulting drinks were stored under the following conditions, respectively:
Shade condition at 50°C, shade condition at 37°C, shade condition at 25°C, shade condition at room temperature, shade condition at 4°C, and sunlight irradiation condition at room temperature.
The survival rate of *Siraitia grosvenori* extract before and after storage was measured (the amount of the *Siraitia grosvenori* extract before storage was calculated as 100%).

**Table 4**

| | | Example 4* |
|---|---|---|
| Cation (mEq/l) | Na⁺ | 21 |
| | K⁺ | 5 |
| | Ca²⁺ | 1 |
| | Mg²⁻ | 0.5 |
| | Total | 27.5 |
| Anion (mEq/l) | Cl⁻ | 16.5 |
| | Citrate⁻⁻⁻ | 10 |
| | Lactate⁻ | 1 |
| | Total | 27.5 |
| *Siraitia grosvenori* extract (mg/l) | | 6.52 |
| Sucralose (mg/l) | | 20 |
| Others | Fructose (g/l) | 9 |
| | White sugar (g/l) | 2.5 |

| | | |
|---|---|---|
| *: Example not falling within the scope of the invention as claimed | | |

The results are shown in Table 5. The results reveal that the drink composition of the present invention is capable of retaining a *Siraitia grosvenori* extract in a suitable manner over a long period of time, and has stability sufficient for the transportation and storage necessary to deliver the drinks to market.

**Table 5**

| Shade condition at 50°C | | | | |
|---|---|---|---|---|
| | Before storage | 7 days later | 10 days later | |
| Survival rate of *Siraitia grosvenori* extract (%) | 100.0 | 99.7 | 99.8 | |

| Shade condition at 37°C | | | | |
|---|---|---|---|---|
| | Before storage | One month later | 3 months later | 6 months later |
| Survival rate of *Siraitia grosvenori* extract (%) | 100.0 | 99.8 | 100.0 | 100.0 |

| Shade condition at 25°C | | | | |
|---|---|---|---|---|
| | Before storage | One month later | 3 months later | |
| Survival rate of *Siraitia grosvenori* extract (%) | 100.0 | 100.0 | 100.0 | |

| Shade condition at room temperature | | | | |
|---|---|---|---|---|
| | Before storage | One month later | 3 months later | 6 months later |
| Survival rate of *Siraitia grosvenori* extract (%) | 100.0 | 99.0 | 98.3 | 98.3 |

| Shade condition at 4°C | | | | |
|---|---|---|---|---|
| | Before storage | 6 months later | | |
| Survival rate of *Siraitia grosvenori* extract (%) | 100.0 | 98.3 | | |

| Sunlight irradiation condition at room temperature | | | | |
|---|---|---|---|---|
| | Before storage | 7 days later | 18 days later | |
| Survival rate of *Siraitia grosvenori* extract (%) | 100.0 | 93.7 | 91.2 | |

## Claims

1. A low-calorie drink composition containing an inorganic electrolyte, an organic acid, a *Siraitia grosvenori* extract, and sucralose,
wherein the inorganic electrolyte is an electrolyte that provides a sodium ion, a potassium ion, a magnesium ion, a calcium ion, and a chloride ion, and
wherein the content of sodium ion is 483 to 529 mg/ml (21 to 23 mEq/l), the content of potassium ion is 175.5 to 234 mg/ml (4.5 to 6 mEq/l), the content of magnesium ion is 6.075 to 12.15 mg/ml (0.5 to 1 mEq/l), the content of calcium ion is 20 to 40 mg/ml (1 to 2 mEq/l), the content of chloride ion is 584.1 to 778.8 mg/ml (16.5 to 22 mEq/l), the content of *Siraitia grosvenori* extract is 6 to 16 mg/l (dry weight basis), and the content of sucralose is 18 to 24 mg/l, wherein the *Siraitia grosvenori* extract is present in an amount of 60 to 75 parts by weight calculated on a dry weight basis per 100 parts by weight of the sucralose.

2. The low-calorie drink composition according to claim 1, wherein the inorganic electrolyte is present in an amount such that the total content of an inorganic cation and an inorganic anion is 30 to 80 mEq per 1,000 ml of the drink composition.

3. The low-calorie drink composition according to claim 1, wherein the organic acid is at least one member selected from the group consisting of citric acid, lactic acid, L-glutamic acid, succinic acid, aspartic acid, alginic acid, malic acid, gluconic acid, and fumaric acid.

4. The low-calorie drink composition according to claim 1, wherein the organic acid is present in an amount of 1,000 to 2,000 mg per 1,000 ml of the drink composition.

5. The low-calorie drink composition according to claim 1, wherein the total content of anion inorganic electrolyte and cation inorganic electrolyte is 55 to 59 mEq/l, the content of organic acid is 1,000 to 2,000 mg/l, the content of *Siraitia grosvenori* extract is 8 to 16 mg/l (dry weight basis), and the content of sucralose is 18 to 24 mg/l.

6. A method for preparing a low-calorie drink composition as defined in any one of claims 1-5, comprising mixing an inorganic electrolyte that provides a sodium ion, a potassium ion, a magnesium ion, a calcium ion, and a chloride ion, an organic acid, a *Siraitia grosvenori* extract, and sucralose in water.

## Patentansprüche

1. Kalorienarme Getränkezusammensetzung, die einen anorganischen Elektrolyten, eine organische Säure, einen *Siraitia-grosvenori-Extrakt* und Sucralose enthält,
wobei der anorganische Elektrolyt ein Elektrolyt ist, der ein Natriumion, ein Kaliumion, ein Magnesiumion, ein Calciumion und ein Chloridion bereitstellt, und
wobei der Gehalt an Natriumion 483 bis 529 mg/ml (21 bis 23 mEq/l) beträgt, der Gehalt an Kaliumion 175,5 bis 234 mg/ml (4,5 bis 6 mEq/l) beträgt, der Gehalt an Magnesiumion 6,075 bis 12,15 mg/ml (0,5 bis 1 mEq/l) beträgt, der Gehalt an Calciumion 20 bis 40 mg/ml (1 bis 2 mEq/l) beträgt, der Gehalt an Chloridion 584,1 bis 778,8 mg/ml (16,5 bis 22 mEq/l) beträgt, der Gehalt an *Siraitia-grosvenori-Extrakt* 6 bis 16 mg/l (Trockengewicht) beträgt und der Gehalt an Sucralose 18 bis 24 mg/l beträgt, wobei der *Siraitia-grosvenori-*Extrakt in einer Menge von 60 bis 75 Gewichtsteilen bezogen auf das Trockengewicht pro 100 Gewichtsteile der Sucralose vorhanden ist.

2. Kalorienarme Getränkezusammensetzung gemäß Anspruch 1, wobei der anorganische Elektrolyt in einer solchen Menge vorhanden ist, dass der Gesamtgehalt an einem anorganischen Kation und einem anorganischen Anion 30 bis 80 mEq pro 1.000 ml der Getränkezusammensetzung beträgt.

3. Kalorienarme Getränkezusammensetzung gemäß Anspruch 1, wobei die organische Säure wenigstens ein Element ausgewählt aus der Gruppe bestehend aus Citronensäure, Milchsäure, L-Glutaminsäure, Bernsteinsäure, Asparaginsäure, Alginsäure, Äpfelsäure, Gluconsäure und Fumarsäure ist.

4. Kalorienarme Getränkezusammensetzung gemäß Anspruch 1, wobei die organische Säure in einer Menge von 1.000 bis 2.000 mg pro 1.000 ml der Getränkezusammensetzung vorhanden ist.

5. Kalorienarme Getränkezusammensetzung gemäß Anspruch 1, wobei der Gesamtgehalt an Anionen des anorganischen Elektrolyten und Kationen des anorganischen Elektrolyten 55 bis 59 mEq/l beträgt, der Gehalt an organischer Säure 1.000 bis 2.000 mg/l beträgt, der Gehalt an *Siraitia-grosvenori-*Extrakt 8 bis 16 mg/l (Trockengewicht) beträgt und der Gehalt an Sucralose 18 bis 24 mg/l beträgt.

6. Verfahren zum Herstellen einer kalorienarmen Getränkezusammensetzung gemäß einem der Ansprüche 1-5, umfassend Mischen eines anorganischen Elektrolyten, der ein Natriumion, ein Kaliumion, ein Magnesiumion, ein Calciumion und ein Chloridion bereitstellt, einer organischen Säure, eines *Siraitia-grosvenori-*Extrakts und Sucralose in Wasser.

## Revendications

1. Composition de boisson hypocalorique contenant un électrolyte inorganique, un acide organique, un extrait de *Siraitia grosvenori* et du sucralose,
dans laquelle l'électrolyte inorganique est un électrolyte qui fournit un ion sodium, un ion potassium, un ion magnésium, un ion calcium et un ion chlorure, et
dans laquelle la teneur en ion sodium est de 483 à 529 mg/ml (21 à 23 mEq/l), la teneur en ion potassium est de 175,5 à 234 mg/ml (4,5 à 6 mEq/l), la teneur en ion magnésium est de 6,075 à 12,15 mg/ml (0,5 à 1 mEq/l), la teneur en ion calcium est de 20 à 40 mg/ml (1 à 2 mEq/l), la teneur en ion chlorure est de 584,1 à 778,8 mg/ml (16,5 à 22 mEq/l), la teneur en extrait de *Siraitia grosvenori* est de 6 à 16 mg/l (sur matière sèche), et la teneur en sucralose est de 18 à 24 mg/l, l'extrait de *Siraitia grosvenori* étant présent en une quantité de 60 à 75 parties en poids, calculée sur matière sèche, pour 100 parties en poids du sucralose.

2. Composition de boisson hypocalorique selon la revendication 1, dans laquelle l'électrolyte inorganique est présent en une quantité telle que la teneur totale en un cation inorganique et en un anion inorganique soit de 30 à 80 mEq pour 1000 ml de la composition de boisson.

3. Composition de boisson hypocalorique selon la revendication 1, dans laquelle l'acide organique est au moins un membre choisi dans le groupe consistant en l'acide citrique, l'acide lactique, l'acide L-glutamique, l'acide succinique, l'acide aspartique, l'acide alginique, l'acide malique, l'acide gluconique et l'acide fumarique.

4. Composition de boisson hypocalorique selon la revendication 1, dans laquelle l'acide organique est présent en une quantité de 1000 à 2000 mg pour 1000 ml de la composition de boisson.

5. Composition de boisson hypocalorique selon la revendication 1, dans laquelle la teneur totale en électrolyte inorganique anion et en électrolyte inorganique cation est de 55 à 59 mEq/l, la teneur en acide organique est de 1000 à 2000 mg/l, la teneur en extrait de *Sirai tia grosvenori* est de 8 à 16 mg/l (sur matière sèche), et la teneur en sucralose est de 18 à 24 mg/l.

6. Procédé de préparation d'une composition de boisson hypocalorique telle que définie dans l'une quelconque des revendications 1 à 5, comprenant le mélange, dans de l'eau, d'un électrolyte inorganique qui fournit un ion sodium, un ion potassium, un ion magnésium, un ion calcium et un ion chlorure, un acide organique, un extrait de *Siraitia grosvenori* et du sucralose.
